# EUROPÄISCHE PATENTSCHRIFT

(11) **EP 1 995 456 B1**
(45) Veröffentlichungstag und Bekanntmachung des Hinweises auf die Patenterteilung: **20.04.2011**
(21) Anmeldenummer: 08008890.9
(22) Anmeldetag: 14.05.2008
(51) Int. Cl.: F03D 7/04, F03D 9/00, F03D 11/00

(54) **Elektrische Schaltung zum Testen eines Getriebes insbesondere einer Windkraftanlage**
Electrical switch for testing a gear system, in particular of a wind energy array
Commutation électrique destinée à tester un châssis, en particulier d'une éolienne

(30) Priorität: 14.05.2007 DE 102007022926
(43) Veröffentlichungstag der Anmeldung: 26.11.2008
(73) Patentinhaber: Converteam GmbH, 12277 Berlin (DE)
(72) Erfinder: Janning, Jörg, 12049 Berlin (DE); Nieschler, Ralf, 63329 Egelsbach (DE)
(74) Vertreter: Schäfer, Wolfgang

(56) Entgegenhaltungen:
- EP-A- 1 077 372
- DE-A1-102006 029 640
- US-A- 4 159 642
- US-A- 4 321 753
- US-A- 4 336 711

## Beschreibung

Die Erfindung betrifft eine elektrische Schaltung zum Testen eines Getriebes insbesondere einer Windkraftanlage nach dem Oberbegriff des Anspruchs 1. Eine änhliche elektrische Schaltung zum Testen eines Getriebes eines Flugzeugs ist beispielsweise aus der US-A-4 159 642 bekannt.

Es sind Windkraftanlagen bekannt, mit denen elektrische Energie erzeugt und in ein Energieversorgungsnetz eingespeist werden kann. Diese Windkraftanlagen weisen einen vom Wind angetriebenen Rotor auf, der zumeist über ein Getriebe mit einem Generator gekoppelt ist. Die von dem Generator erzeugte elektrische Energie wird direkt oder über elektrische Schaltungen in das Energieversorgungsnetz eingespeist.

Insbesondere das Getriebe der Windkraftanlage muss derart ausgebildet sein, dass es den von einem veränderlichen Wind erzeugten mechanischen Kräften sowie den daraus resultierenden unterschiedlichen Getriebedrehzahlen standhält. Dies muss auch dann gelten, wenn sich die Betriebsgrößen des auf den Generator einwirkenden Energieversorgungsnetzes, also insbesondere dessen Spannung und/oder dessen Frequenz, verändern, z.B. schwanken.

Zum Testen einer Windkraftanlage ist es bekannt, deren Getriebe mit angekoppeltem Generator mit Hilfe eines Elektromotors anzutreiben. Durch eine entsprechende Ansteuerung des Elektromotors können dann unterschiedliche Windbedingungen simuliert werden.

Weiterhin ist es bekannt, den Generator über einen mit mehreren Abgriffen versehenen Transformator mit einem Energieversorgungsnetz zu verbinden und mit Hilfe von Umschaltern unterschiedliche Netzspannungen nachzubilden. Alternativ ist es bekannt, den Generator über zuschaltbare Längsdrosseln und gegebenenfalls zusätzlich vorhandenen, nach Masse schaltbaren Drosseln mit dem Energieversorgungsnetz zu verbinden und auf diese Weise unterschiedliche Netzspannungen zu erzeugen.

Ein Nachteil dieser bekannten Testanordnungen besteht darin, dass zur Simulation der Veränderungen des Energieversorgungsnetzes immer Umschaltvorgänge notwendig sind, die Schaltgeräte erforderlich machen, die ihrerseits mit einem erhöhten Aufwand verbunden sind. Weiterhin führen die gegebenenfalls vorhandenen Drosseln zu unerwünschten Energieverlusten. Ein weiterer Nachteil besteht in der Ungenauigkeit und der geringen Flexibilität der bekannten Testanordnungen.

Aufgabe der Erfindung ist es, eine elektrische Schaltung zum Testen eines Getriebes insbesondere einer Windkraftanlage zu schaffen, die mit einfachen Mitteln eine möglichst genaue Simulation der Veränderungen des Energieversorgungsnetzes ermöglicht.

Die Erfindung löst diese Aufgabe durch eine elektrische Schaltung nach dem Anspruch 1.

Die erfindungsgemäße elektrische Schaltung weist einen Motor auf, mit dem ein Getriebe antreibbar ist. Weiterhin ist ein Generator vorgesehen, der von dem Getriebe antreibbar ist. Dem Generator wird dabei eine vorgebbare veränderliche Wechselspannung eingeprägt. Es ist eine Gleichspannungsschiene vorgesehen, auf der eine vorgebbare Gleichspannung vorhanden ist. Mindestens ein Umrichter, insbesondere ein Wechselrichter, ist an die Gleichspannungsschiene angeschlossen. Dieser Umrichter ist mit dem Generator gekoppelt. Mit Hilfe des Umrichters kann die veränderliche Wechselspannung erzeugt werden.

Die Steuerung des Umrichters macht keine aufwendigen Schaltgeräte oder dergleichen wie beim Stand der Technik erforderlich. Ebenfalls weist die erfindungsgemäße elektrische Schaltung keine verlustbehafteten Drosseln oder dergleichen auf. Statt dessen kann der erfindungsgemäße Umrichter sehr genau und ohne größere Verluste in bekannter Weise realisiert werden.

Ein weiterer Vorteil der Erfindung besteht darin, dass es die Verwendung eines Umrichters ermöglicht, dem Generator einerseits eine Wechselspannung einzuprägen, wie sie im Normalbetrieb der Wechselspannung des Energieversorgungsnetzes entspricht. Andererseits kann mit Hilfe des Umrichters jedoch auch eine Wechselspannung vorgegeben werden, wie sie nur in einem Fehlerfall, beispielsweise einem ein- oder zweiphasigen Kurzschluss, des Energieversorgungsnetzes entsteht. Es können somit sämtliche möglichen Wechselspannungen ohne größeren Aufwand nachgebildet werden, wie sie auch bei dem Energieversorgungsnetz auftreten können.

Bei vorteilhaften Weiterbildungen der Erfindung wird der Umrichter von einem Pulsmustergenerator angesteuert, und es wird der Umrichter über einen Transformator mit dem Generator gekoppelt. Dabei ist es besonders zweckmäßig, wenn vier Umrichter und ein dreiphasiger Transformator vorgesehen sind, wobei jeder der Umrichter von einem Pulsmustergenerator angesteuert ist. Diese Weiterbildungen erlauben eine besonders genaue Erzeugung der dem Generator eingeprägten Wechselspannung.

Bei einer weiteren vorteilhaften Ausgestaltung der Erfindung ist ein weiterer Umrichter, insbesondere ein weiterer Wechselrichter vorgesehen, der an die Gleichspannungsschiene angeschlossen ist, und der mit dem Motor verbunden ist. Zweckmäßigerweise wird der weitere Umrichter von einem Pulsmustergenerator angesteuert. Damit wird in besonders einfacher Weise eine Nachbildung von Drehzahlveränderungen des zu testenden Getriebes erreicht.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

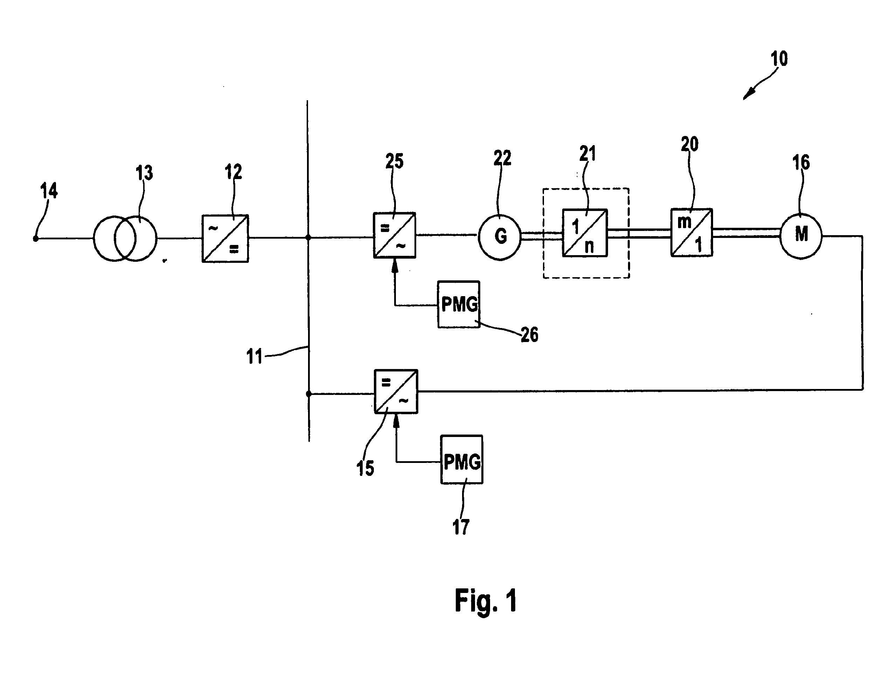

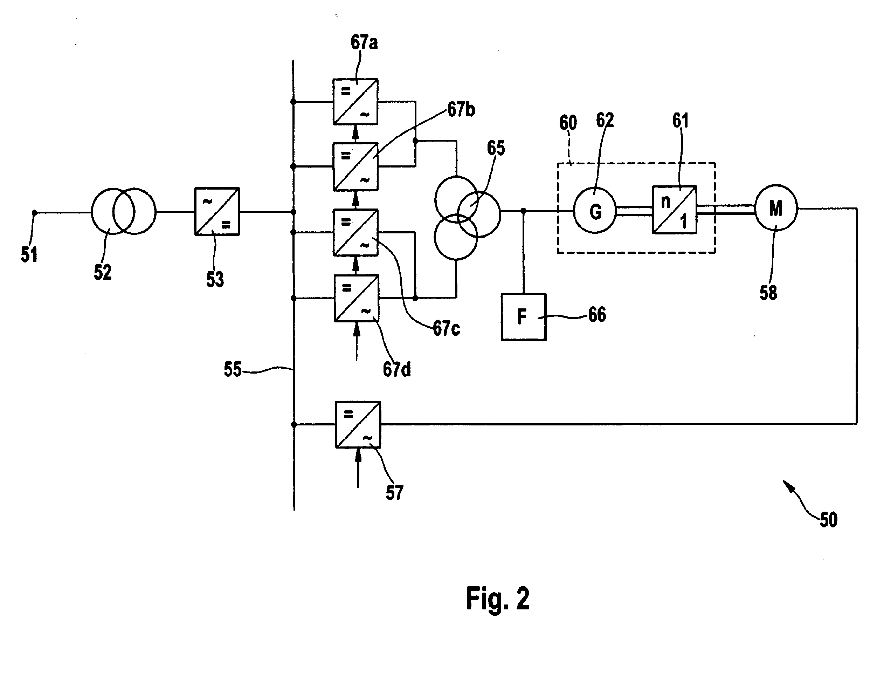

Figur 1 zeigt ein schematisches Blockschaltbild eines ersten Ausführungsbeispiels einer erfindungsgemäßen elektrischen Schaltung zum Testen eines Getriebes, und Figur 2 zeigt ein schematisches Blockschaltbild eines zweiten Ausführungsbeispiels einer erfindungsgemäßen elektrischen Schaltung zum Testen einer Windkraftanlage.

In der Figur 1 ist eine elektrische Schaltung 10 dargestellt, die eine Gleichspannungsschiene 11 aufweist, die über einen Gleichrichter 12 und einen Transformator 13 an ein Energieversorgungsnetz 14 angeschlossen ist. Durch eine entsprechende Ausbildung des Transformators 13 und des Gleichrichters 12 kann somit eine erwünschte Gleichspannung auf der Gleichspannungsschiene 11 erzeugt werden.

Es wird darauf hingewiesen, dass die Erzeugung der erwünschten Gleichspannung auch auf andere Art und Weise erfolgen kann. So kann anstelle des Gleichrichters 12 auch eine Diodenbrücke oder dergleichen vorhanden sein. Ebenfalls kann der Transformator 13 durch andere elektrische Bauteile ersetzt oder ergänzt werden.

An die Gleichspannungsschiene 11 ist ein Wechselrichter 15 angeschlossen, der einen Motor 16 mit einer Wechselspannung beaufschlagt. Der Wechselrichter 15 wird von einem Pulsmustergenerator (PMG) 17 angesteuert, so dass die von dem Wechselrichter 15 erzeugte Wechselspannung weitgehend beliebig einstellbar und damit veränderbar ist. Dies bedeutet, dass die Drehzahl des Motors 16 ebenfalls weitgehend beliebig veränderbar ist.

Der Motor 16 treibt ein Anpassgetriebe 20 an. Über eine mechanische Welle ist das Anpassgetriebe 20 mit einem zu testenden Getriebe 21 drehfest verbunden. Das Getriebe 21 ist seinerseits mit einem Generator 22 drehfest verbunden. Dabei ist im Ausführungsbeispiel der Figur 1 vorgesehen, dass nur das Getriebe 21 getestet wird, was mit Hilfe des gestrichelten Blocks kenntlich gemacht ist.

Das Anpassgetriebe 20 hat nur die Aufgabe, die Ausgangsdrehzahl des zu testenden Getriebes 21, sofern erforderlich, an die Eingangsdrehzahl des Generators 22 anzupassen. Es wird darauf hingewiesen, dass das Anpassgetriebe 20 gegebenenfalls auch entfallen kann.

Der Generator 22 ist über einen Wechselrichter 25 an die Gleichspannungsschiene 11 angeschlossen. Der Wechselrichter 25 wird von einem Pulsmustergenerator (PMG) 26 angesteuert, so dass die von dem Wechselrichter 25 erzeugte und an dem Generator 22 anliegende Wechselspannung weitgehend beliebig einstellbar und damit veränderbar ist.

Gegebenenfalls ist es möglich, dass zwischen dem Wechselrichter 25 und dem Generator 22 noch weitere elektrische Bauteile vorhanden sind. Beispielsweise kann ein Transformator vorgesehen sein, mit dem eine elektrische Anpassung des Wechselrichters 25 und des Generators 22 erreichbar ist.

Die von dem Wechselrichter 25 erzeugte und an dem Generator 22 anliegende Wechselspannung stellt eine simulierte Netzspannung dar, die mit Hilfe des Pulsmustergenerators 26 in einer erwünschten Weise vorgebbar ist. Es kann also von dem Wechselrichter 26 dem Generator 22 eine Wechselspannung eingeprägt werden, mit der die Veränderungen des Energieversorgungsnetzes nachgebildet werden.

Der Gleichrichter 12 und die Wechselrichter 15, 25 stellen ganz allgemein Umrichter dar, die mit Hilfe von Leistungshalbleiterbauelementen, beispielsweise sogenannten IGBTs (IGBT = insulated gate bipolar transistor) realisiert sein können. Derartige Umrichter können dann von einer Gleichtaktspannung angesteuert werden, die von den Pulsmustergeneratoren 17, 26 erzeugt wird.

Im Betrieb der elektrischen Schaltung 10 der Figur 1 wird das zu testende Getriebe 21 über das Anpassgetriebe 20 von dem Motor 16 in eine Drehbewegung versetzt. Die Drehzahl des Getriebes 21 ist dabei über den Pulsmustergenerator 17 und den Wechselrichter 15 einstellbar. Das Getriebe 21 treibt den Generator 22 an. Dieser erzeugt eine ausgangsseitige Wechselspannung. Gleichzeitig liegt an diesem Ausgang des Generators 22 die simulierte Netzspannung an, die über den Pulsmustergenerator 26 und den Wechselrichter 25 einstellbar ist.

Insgesamt kann somit bei der elektrischen Schaltung 10 der Figur 1 einerseits die Drehzahl des zu testenden Getriebes 21, wie auch die an dem Generator 22 anliegende Wechselspannung weitgehend beliebig vorgegeben und verändert werden. Damit ist es möglich, das Getriebe 21 unter beliebigen Bedingungen, insbesondere unter den Bedingungen eines sich ändernden Energieversorgungsnetzes, zu testen.

Die Änderung der Drehzahl, wie auch die Simulation des Energieversorgungsnetzes kann dabei sehr genau mit Hilfe der Wechselrichter 15, 25 und der zugehörigen Pulsmustergeneratoren 17, 26 durchgeführt werden.

Weiterhin verbraucht die elektrische Schaltung der Figur 1 nur wenig Energie, da die von dem Generator 22 erzeugte Energie über die Gleichspannungsschiene 11 wieder dazu verwendet wird, den Motor 16 anzutreiben. Letztlich muss aus dem Energieversorgungsnetz 14 nur diejenige Energie entnommen werden, die aufgrund von Reibungs-, Wärme- und sonstigen Verlusten in den mechanischen Bauteilen sowie in der elektrischen Schaltung 10 verloren geht.

In der Figur 2 ist eine elektrische Schaltung 50 dargestellt, die speziell auf eine Windkraftanlage ausgerichtet ist.

Die Wechselspannung eines Energieversorgungsnetzes 51 wird über einen Transformator 52 und über einen Gleichrichter 53 an eine Gleichspannungsschiene 55 weitergegeben. Auf der Gleichspannungsschiene 55 liegt somit eine Gleichspannung an, deren Größe mit Hilfe des Transformators 52 und des Gleichrichters 53 einstellbar ist.

An der Gleichspannungsschiene 55 ist ein Wechselrichter 57 angeschlossen, der einen Motor 58 mit einer Wechselspannung speist. Die Ausgangsspannung des Wechselrichters 57 kann beispielsweise mit Hilfe eines Pulsmustergenerators weitgehend beliebig eingestellt werden. Damit ist auch die Drehzahl des Motors 58 weitgehend beliebig einstellbar.

In dem gestrichelt dargestellten Block 60 ist ein Getriebe 61 einer Windkraftanlage vorhanden, das mit einem Generator 62 der Windkraftanlage über eine Welle drehfest gekoppelt ist. Diese Bauteile der Windkraftanlage sollen getestet werden. Gegebenenfalls ist es auch möglich, dass das Getriebe 61 nicht vorhanden ist, und dass dann nur der Generator 62 getestet werden soll.

Der Motor 58 ist über eine Welle drehfest mit dem Getriebe 61 gekoppelt. Mit Hilfe des Motors 58 wird der die Windkraftanlage antreibende Wind nachgebildet. Mit Hilfe des Wechselrichters 57 können dabei die Windstärke und Veränderungen der Windstärke simuliert werden.

Der Generator 62 ist mit einem dreiphasigen Transformator 65 gekoppelt. Gegebenenfalls sind zwischen dem Transformator 65 und dem Generator 62 noch zusätzliche Filterschaltungen 66 vorgesehen. Der Transformator 65 ist seinerseits über vier Wechselrichter 67a, 67b, 67c, 67d mit der Gleichspannungsschiene 55 verbunden. Es wird darauf hingewiesen, dass anstelle des Transformators 65 auch eine Längsdrossel-Schaltung vorhanden sein kann, die gegebenenfalls mit der Filter-Schaltung 66 zusammenwirkt.

Die Ausgangsspannungen der einzelnen Wechselrichter 67a, 67b, 67c, 67d können beispielsweise mit Hilfe eines jeweils zugehörigen Pulsmustergenerators weitgehend beliebig eingestellt und verändert werden. Damit kann von den vier Wechselrichtern 67a, 67b, 67c, 67d, dem Transformator 65 und gegebenenfalls den Filterschaltungen 66 eine Netzspannung simuliert werden, die dem Generator 62 als Eingangsspannung eingeprägt ist.

Diese Netzspannung kann über die Wechselrichter 67a, 67b, 67c, 67d entsprechend den Änderungen und Schwankungen eines Energieversorgungsnetzes vorgegeben werden. Weiterhin kann mit dieser Netzspannung ein Fehler in einem Energieversorgungsnetz simuliert werden, beispielsweise ein einpoliger Kurzschluss, oder ein zweipoliger oder dreipoliger naher oder entfernter Kurzschluss, und dergleichen.

Insgesamt kann somit bei der elektrischen Schaltung 50 der Figur 2 einerseits die Drehzahl des Getriebes 61 sowie andererseits die dem Generator 62 eingeprägte Wechselspannung weitgehend beliebig vorgegeben und verändert werden. Damit ist es möglich, das Getriebe 61 und den Generator 62 unter beliebigen Bedingungen, insbesondere unter den simulierten Bedingungen einer sich ändernden Windstärke sowie eines sich ändernden Energieversorgungsnetzes, zu testen.

Bei nicht-vorhandenem Getriebe 61 ist es auf diese Weise möglich, nur den Generator 62 in entsprechender Weise zu testen.

Die Nachbildung des Winds, wie auch die Simulation des Energieversorgungsnetzes kann dabei sehr genau mit Hilfe der Wechselrichter 57, 67a, 67b, 67c, 67d durchgeführt werden. Weiterhin verbraucht die elektrische Schaltung 50 der Figur 2 nur diejenige Energie, die aufgrund von Reibungs-, Wärme- und sonstigen Verlusten in den mechanischen Bauteilen sowie in der elektrischen Schaltung 50 verloren geht.

## Patentansprüche

1. Elektrische Schaltung (10; 50) zum Testen eines Getriebes (21; 61) insbesondere einer Windkraftanlage, mit einem Motor (16; 58), mit dem das Getriebe (21; 61) antreibbar ist, und mit einem Generator (22; 62), der von dem Getriebe (21; 61) antreibbar ist, wobei dem Generator (22; 62) eine vorgebbare veränderliche Wechselspannung eingeprägt ist, **dadurch gekennzeichnet, dass** eine Gleichspannungsschiene (11; 55) vorgesehen ist, auf der eine vorgebbare Gleichspannung vorhanden ist, und dass mindestens ein Umrichter, insbesondere ein Wechselrichter (25; 67a, 67b, 67c, 67d) an die Gleichspannungsschiene (11; 55) angeschlossen ist, der mit dem Generator (22; 62) gekoppelt ist, und mit dem die veränderliche Wechselspannung erzeugt werden kann.

2. Elektrische Schaltung (50) zum Testen eines Generators (62) insbesondere einer Windkraftanlage, mit einem Motor (58), von dem der Generator (62) antreibbar ist, wobei dem Generator (62) eine vorgebbare veränderliche Wechselspannung eingeprägt ist, **dadurch gekennzeichnet, dass** eine Gleichspannungsschiene (55) vorgesehen ist, auf der eine vorgebbare Gleichspannung vorhanden ist, und dass mindestens ein Umrichter, insbesondere ein Wechselrichter (67a, 67b, 67c, 67d) an die Gleichspannungsschiene (55) angeschlossen ist, der mit dem Generator (62) gekoppelt ist, und mit dem die veränderliche Wechselspannung erzeugt werden kann.

3. Elektrische Schaltung (10; 50) nach Anspruch 1 oder Anspruch 2, wobei der Umrichter von einem Pulsmustergenerator (26) angesteuert ist.

4. Elektrische Schaltung (50) nach einem der Ansprüche 1 bis 3, wobei der Umrichter über einen Transformator (65) mit dem Generator (62) gekoppelt ist.

5. Elektrische Schaltung (50) nach Anspruch 4, wobei vier Umrichter und ein dreiphasiger Transformator vorgesehen sind, und wobei jeder der Umrichter von einem Pulsmustergenerator angesteuert ist.

6. Elektrische Schaltung (50) nach einem der vorstehenden Ansprüche, wobei der Generator (62) mit Filterschaltungen (66) verbunden ist.

7. Elektrische Schaltung (10; 50) nach einem der vorstehenden Ansprüche, wobei ein weiterer Umrichter, insbesondere ein weiterer Wechselrichter (15; 57) vorgesehen ist, der an die Gleichspannungsschiene (11; 55) angeschlossen ist, und der mit dem Motor (16; 58) verbunden ist.

8. Elektrische Schaltung (10) nach Anspruch 7, wobei der weitere Umrichter von einem Pulsmustergenerator (17) angesteuert ist.

9. Elektrische Schaltung (10; 50) nach einem der vorstehenden Ansprüche, wobei die Gleichspannung der Gleichspannungsschiene (11; 55) mit Hilfe eines Umrichters aus einem Energieversorgungsnetz erzeugt ist.

10. Elektrische Schaltung (50) nach einem der vorstehenden Ansprüche, wobei das Getriebe (61) ein Bestandteil einer Windkraftanlage ist.

11. Elektrische Schaltung (50) nach einem der vorstehenden Ansprüche, wobei der Generator (62) ein Bestandteil der Windkraftanlage ist.

## Claims

1. Electrical switch (10; 50) for testing a gear system (21; 61) in particular of a wind energy array, comprising a motor (16; 58), by which the gear system (21; 61) can be driven, and a generator (22; 62), which can be driven by the gear system (21; 61), wherein a pre-selectable changing alternating voltage is applied to the generator (22; 62), **characterized in that** a constant voltage bar (11; 55) is provided, on which a pre-selectable constant voltage is present and **in that** at least one inverter, in particular an inverted rectifier (25; 67a, 67b, 67c, 67d), which is coupled to the generator (22; 62), is connected to the constant voltage bar (11; 55) and with which the changing alternating voltage can be produced.

2. Electrical switch (50) for testing a generator (62) in particular of a wind energy array, comprising a motor (58), by which the generator (62) can be driven, wherein a pre-selectable changing alternating voltage is applied to the generator (62), **characterized in that** a constant voltage bar (55) is provided, on which a pre-selectable constant voltage is present, and **in that** at least one inverter, in particular an inverted rectifier (67a, 67b, 67c, 67d), which is coupled to the generator (62), is connected to the constant voltage bar (55) and with which the changing alternating voltage can be produced.

3. Electrical switch (10; 50) according to claim 1 or claim 2, wherein the inverter is controlled by a pulse pattern generator (26).

4. Electrical switch (50) according to anyone of claims 1 to 3, wherein the inverter is coupled to the generator (62) via a transformer (65).

5. Electrical switch (50) according to claim 4, wherein four inverters and a three-phase transformer are provided and wherein each of the inverters is controlled by a pulse pattern generator.

6. Electrical switch (50) according to any one of the above claims, wherein the generator (62) is connected to filter switches (66).

7. Electrical switch (10; 50) according to any one of the above claims, wherein a further inverter, in particular a further inverted rectifier (15; 57) is provided, which is connected to the constant voltage bar (11; 55) and which is connected to the motor (16; 58).

8. Electrical switch (10) according to claim 7, wherein the further inverter is controlled by a pulse pattern generator (17).

9. Electrical switch (10; 50) according to any one of the above claims, wherein the constant voltage of the constant voltage bar (11; 55) is produced by means of an inverter from a power supply network.

10. Electrical switch (50) according to anyone of the above claims, wherein the gear system (61) is a component of a wind energy array.

11. Electrical switch (50) according to anyone of the above claims, wherein the generator (62) is a component of the wind energy array.

## Revendications

1. Circuit électrique (10 ; 50) destiné à tester un engrenage (21 ; 61), en particulier, d'une éolienne, comportant un moteur (16 ; 58), par lequel l'engrenage (21 ; 61) peut être actionné, et comportant un générateur (22 ; 62), qui est propre à être actionné par l'engrenage (21 ; 61), une tension alternative variable prédéfinissable étant appliquée au générateur (22 ; 62), **caractérisé en ce qu'**il est prévu un rail de tension continue (11 ; 55), sur lequel est disponible une tension continue prédéfinissable, et **en ce qu'**au rail de tension continue (11 ; 55) est raccordé au moins un changeur de fréquence, en particulier un onduleur (25 ; 67a, 67b, 67c, 67d), qui est couplé avec le générateur (22 ; 62) et avec lequel peut être générée la tension alternative variable.

2. Circuit électrique (50) destiné à tester un générateur (62), en particulier, d'une éolienne, comportant un moteur (58), par lequel le générateur (62) peut être actionné, une tension alternative variable prédéfinissable étant appliquée au générateur (62), **caractérisé en ce qu'**il est prévu un rail de tension continue (55), sur lequel est disponible une tension continue prédéfinissable, et **en ce qu'**au rail de tension continue (55) est raccordé au moins un changeur de fréquence, en particulier un onduleur (67a, 67b, 67c, 67d), qui est couplé avec le générateur (62) et avec lequel peut être générée la tension alternative variable.

3. Circuit électrique (10 ; 50) selon la revendication 1 ou la revendication 2, dans lequel le changeur de fréquence est commandé par un générateur de modèle d'impulsion (26).

4. Circuit électrique (50) selon l'une quelconque des revendications 1 à 3, dans lequel le changeur de fréquence est couplé avec le générateur (62) via un transformateur (65).

5. Circuit électrique (50) selon la revendication 4, dans lequel sont prévus quatre changeurs de fréquence et un transformateur triphasé, et dans lequel chacun des changeurs de fréquence est commandé par un générateur de modèle d'impulsion.

6. Circuit électrique (50) selon l'une quelconque des revendications précédentes, dans lequel le générateur (62) est relié à des composants de filtrage (66).

7. Circuit électrique (10 ; 50) selon l'une quelconque des revendications précédentes, dans lequel est prévu un changeur de fréquence supplémentaire, en particulier un onduleur (15 ; 57) supplémentaire, qui est raccordé au rail de tension continue (11 ; 55) et qui est relié au moteur (16 ; 58).

8. Circuit électrique (10) selon la revendication 7, dans lequel le changeur de fréquence supplémentaire est commandé par un générateur de modèle d'impulsion (17).

9. Circuit électrique (10 ; 50) selon l'une quelconque des revendications précédentes, dans lequel la tension continue du rail de tension continue (11 ; 55) est générée à partir d'un réseau d'alimentation en énergie au moyen d'un changeur de fréquence.

10. Circuit électrique (50) selon l'une quelconque des revendications précédentes, dans lequel l'engrenage (61) est une partie intégrante d'une éolienne.

11. Circuit électrique (50) selon l'une quelconque des revendications précédentes, dans lequel le générateur (62) est une partie intégrante d'une éolienne.
